# EUROPEAN PATENT APPLICATION

(11) **EP 4 793 095 A1**
(43) Date of publication of application: **19.08.2026**
(21) Application number: 26158536.8
(22) Date of filing: 13.02.2026
(51) Int. Cl.: B60Q 1/26, B62D 35/00, B62D 37/02

(54) **SPORT ROAD VEHICLE WITH VARIABLE REAR AERODYNAMIC LOAD**

(30) Priority: 14.02.2025 IT 202500002826
(71) Applicant: FERRARI S.p.A., 41100 Modena (IT)
(72) Inventor: SEDDA, Salvatore, 41100 MODENA (IT); LOPES FURTADO, Jason, 41100 MODENA (IT)
(74) Representative: Studio Torta S.p.A.

(57) **Abstract**

Road vehicle (1) with variable rear aerodynamic load; wherein the vehicle (1) comprises a roll axis (X), a pitch axis (Y), a yaw axis (Z), a front end (2) of air penetration as the vehicle (1) moves forward, a cockpit (3) and a rear end (4) beyond which the aerodynamic flow flowing above the cockpit detaches from the vehicle (1); wherein the rear end (4) comprises: a aerodynamic body (5) configured to generate a rear aerodynamic load as the vehicle (1) moves forward; a light assembly (6) housing at least one electrical lighting device; wherein the light assembly (6) is movable in relation to the aerodynamic body (5) to move between a first configuration, wherein it does not cooperate with the aerodynamic body (5) and does not contribute to rear aerodynamic load generation, and a second configuration wherein it cooperates with the aerodynamic body (5) and contributes to rear aerodynamic load generation.

## Description

### CROSS-REFERENCE TO RELATED APPLICATIONS

This patent application claims priority from Italian patent application no. 102025000002826 filed on February 14, 2025, the entire disclosure of which is incorporated herein by reference.

### Technical field of the invention

The technical field of reference relates to road vehicles, in particular sport road vehicles. In this technical field, it is known to provide an aerodynamic element at the rear end of the vehicle to generate a rear aerodynamic load as the vehicle moves forward. The present invention will deal with the problem of offering an innovative mode for varying the rear aerodynamic load in this type of vehicles.

### Background art

As is known, a road vehicle is a vehicle whose geometry and dynamics are defined by three particular axes, known as roll axis, pitch axis and yaw axis. In general, the road vehicle develops along the roll axis and comprises a front end portion, known simply as front end, and which in sport vehicles is configured (for example is provided with a front end aerodynamic wing or airfoil) to penetrate the air as the vehicle moves forward, a cockpit and a rear portion (known simply as rear end). At the rear end, the aerodynamic flow detaches and flows above and below the cockpit, thereby creating the so-called slipstream. In sport vehicles, the rear end is often provided with an aerodynamic element at the upper edge of the rear end configured for rear aerodynamic load generation. This rear aerodynamic element can be produced in the form of a wing or of a spoiler beyond which the flow flowing above the cockpit detaches from the vehicle. This rear aerodynamic element has a substantially transverse development parallel to the pitch axis and extends from one side of the vehicle to the other to maximize its effects. Beyond the rear edge of the rear aerodynamic element no other element of the vehicle that interacts with the exiting aerodynamic flow is present. It is known to provide the vehicle with the ability to be able to vary the rear aerodynamic load. Currently, this ability is achieved by equipping the rear aerodynamic element with movable portions such as to produce a wing or a spoiler with variable geometry.

Starting from these prior art practices, the object of the present invention is to provide an innovative way of varying the rear aerodynamic load wherein, as shall become apparent, in some conditions with a component of the rear end currently used only for other purposes an additional aerodynamic functionality is provided through cooperation with the rear wing or spoiler.

### Subject matter and summary of the invention

According to the present invention, there is provided a road vehicle with the ability to vary the rear aerodynamic load as defined in the appended claims.

The starting point of the present invention is a road vehicle with a roll axis, a pitch axis and a yaw axis. The minimum elements required for implementation of the present invention, i.e., for providing a road vehicle with variable rear aerodynamic load, are the presence of a front end of air penetration as the vehicle moves forward, a cockpit and a rear end beyond which the aerodynamic flow detaches from the vehicle. The rear end of the present invention comprises an aerodynamic body configured to generate a rear aerodynamic load as the vehicle moves forward. In this sense, the vehicle of the present invention can be defined as a sport vehicle. Moreover, the rear end further comprises a light assembly that houses at least one electrical lighting device. The light assembly is integrated in the rear end at a height below that of the aerodynamic body (i.e., between the aerodynamic body and the bearing surface of the vehicle). All these elements are known to the person skilled in the art and consequently no further details are required for the correct comprehension of the scope of the present invention. Starting from this known configuration, according to the main aspect of the present invention, the light assembly is improved so that it is no longer merely a fixed element with the sole purpose of emitting light, but it is designed as a movable element in relation to the rear end, in particular movable in relation to the aerodynamic body (which can in turn be fixed or movable), to move between:
- a first configuration wherein the light assembly has the sole function of lighting and does not cooperate with the aerodynamic body and does not contribute to rear aerodynamic load generation (in the sense that it does not alter the rear aerodynamic load generated by the aerodynamic body); and
- a second configuration wherein the light assembly has a dual function both of lighting and of aerodynamics as it is moved into a raised position in relation to the previous position and wherein it cooperates with the aerodynamic body (encounters the flow exiting the aerodynamic body) and contributes to rear aerodynamic load generation.

Consequently, the main aspect of the present invention lies in having provided a component, usually static and intended solely for other functions, with mobility and an aerodynamic function in order to vary the rear aerodynamic load.

According to an embodiment, the aerodynamic body is a transverse wing or a transverse spoiler with development substantially parallel to the pitch axis and extending from one side of the vehicle to the other at the rear end. In this embodiment, the light assembly comprises a body for housing the electrical lighting device (the body is the element of the light assembly that now also has aerodynamic function) with transverse development substantially parallel to the pitch axis parallel to the wing or a spoiler and is symmetrical along the axis Y in relation to the axis X (i.e., it comprises right and left portions in relation to the longitudinal centreline of the vehicle).

Preferably, the wing or the spoiler comprises a rear edge that represents the point of detachment of the aerodynamic flow. In the first "lighting only" configuration the body of the light assembly is completely below the wing or the spoiler, i.e., it does not comprise any portion protruding superiorly and rearwards beyond the rear edge of the wing or of the spoiler. Alternatively, in the first configuration the light assembly can also be housed inside a recess produced in the volume of the wing so as to produce a configuration preferable for reducing drag. In the second configuration, the light assembly is moved (by a specific actuator) so that the body of the light assembly comprises at least one portion projecting rearwardly (and also preferably superiorly) beyond the rear edge of the wing or of the spoiler so that this portion is struck directly by the aerodynamic flow exiting from the rear edge of the wing or of the spoiler.

According to an embodiment, the body of the light assembly comprises two modules at symmetrical opposite sides with respect to the roll axis X along the pitch axis Y wherein the right and left modules are independently movable to vary the rear end load only on the right or only on the left of the vehicle.

According to a preferred embodiment of the vehicle, the rear end comprises an axial aerodynamic channel that develops behind the cockpit along the roll axis X and that is limited superiorly by the first aerodynamic body and inferiorly by a diffuser body (the opposite face of the diffuser is facing the ground to guide the aerodynamic flow that passes below the vehicle. As this channel is produced behind the cockpit, part of the flow that passes above the cockpit flows above the rear wing or the rear spoiler and part penetrates the channel. In this vehicle, the channel is also supplied by other flows passing below the cockpit. In this vehicle, in the first configuration the light assembly is housed in the aerodynamic channel at its rear discharge outlet or opening (which is limited superiorly by the rear wing or spoiler).

Once again in this vehicle with aerodynamic channel behind the cockpit, the light assembly moves from the first to the second position by means of a tilting movement, preferably realised by providing two opposite vertical side walls joining the diffuser body to the first aerodynamic body and wherein slotted openings are provided in the vertical walls for housing pins protruding laterally from the body of the light assembly.

Once again in this vehicle, wherein in the first configuration the light assembly is housed in the aerodynamic channel placed behind the cockpit, the light assembly can further be configured to realise different configurations also in the aerodynamic channel. Preferably, in the aerodynamic channel there can be provided a second airfoil configured to make a rear extension of the rear edge of the diffuser body and in this embodiment the body of the light assembly can be moved from the first to a third configuration, wherein it has a portion directed towards the rear edge of the second airfoil to further obstruct the aerodynamic channel.

### Brief description of the drawings

For a better understanding of the present invention, some embodiments shall now be described purely by way of non-limiting example, with reference to the accompanying drawings, wherein:
- Fig. 1 is a schematic view of a first example of a road vehicle that can be improved thanks to the present invention;
- Figs. 2 and 3 schematically show some components of the vehicle of Fig. 1 in two different configurations to vary the rear aerodynamic load;
- Figs. 4-6 schematically show a second example of a road vehicle that can be improved thanks to the present invention;
- Figs. 7-9 schematically show some components of the vehicle of Figs. 4-6 in three different configurations to vary the rear aerodynamic load.

### Preferred embodiments of the invention

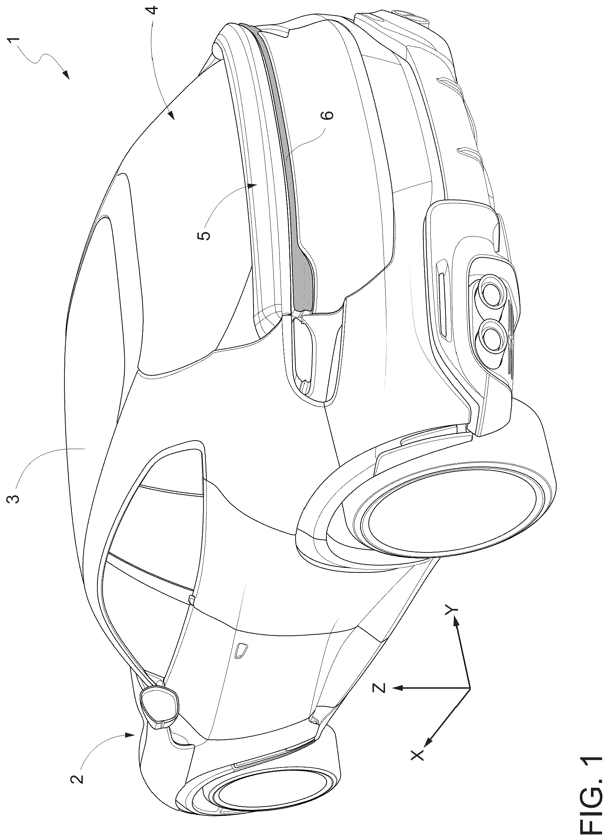

Fig. 1 is a schematic view of a first example of a road vehicle that can be improved thanks to the present invention. This figure shows a sport road vehicle indicated as a whole with 1. Fig. 1 also shows the axes X Y and Z representing the roll, pitch and yaw axes of the vehicle 1. Along the axis X, the vehicle comprises, in series, a front end 2, a cockpit 3 and a rear end 4. In this example, the front end 2, the cockpit 3 and the rear end 4 are portions of a substantially continuous chassis above which during movement an aerodynamic flow flows from the front end 2 to the rear end 4. In Fig. 1 the reference 5 indicates a rear aerodynamic body in the form of a wing with development along the axis Y extending from one side of the vehicle 1 to the other. This wing 5 is configured to realise an aerodynamic load at the rear end 4 and the rear edge of this wing 5 represents the most rearwards point of the vehicle 1 beyond which the aerodynamic flow detaches from the vehicle 1. The reference 6 indicates a light assembly with a body housing lighting devices. As can be seen in Fig. 1, the light assembly 6 in this example has a development along the axis Y extending from one side of the vehicle 1 to the other, parallel to the wing 5. As in known vehicles, the light assembly 6 is integrated in the rear end 4 in a position between the wing 5 and the surface on which the vehicle 1 moves forwards. The present invention further comprises the embodiment wherein the light assembly is integrated in the wing 5 itself, in particular in a recess produced in a rear and/or lower portion of the wing 5.

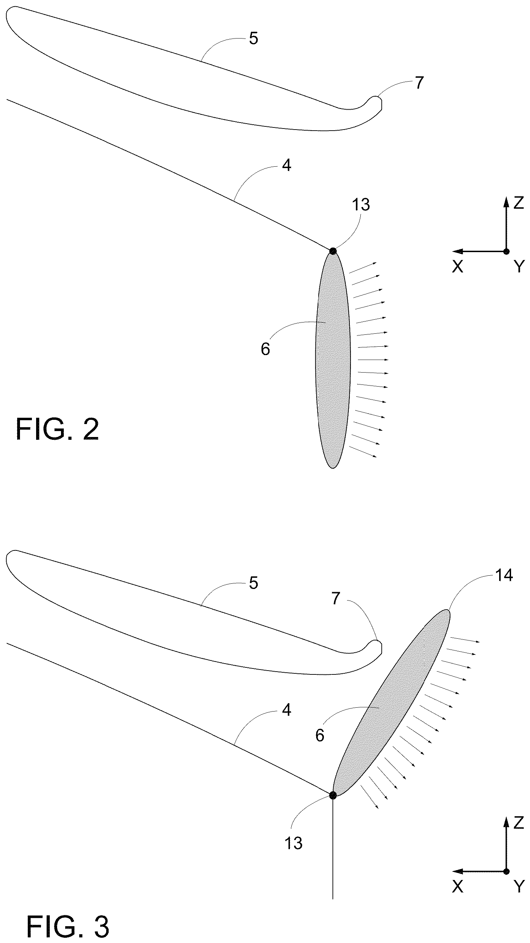

Figs. 2 and 3 schematically show some components of the vehicle of Fig. 1 in two different configurations to vary the rear aerodynamic load. In particular, Figs. 2 and 3 schematically show in a sectional view in the plane X-Z a portion of the rear end 4, and the wing 5 and the light assembly 6 are visible. Fig. 2 schematizes the configuration visible in Fig. 1 wherein the light assembly 6 is integrated in a position of the rear end 4 below the wing 5. Fig. 3 shows an innovative position that can be reached by the light assembly 6 of the present invention. In fact, according to the present invention, the light assembly 6 is movable from the classic position of Fig. 2 to an innovative position wherein it intercepts the aerodynamic flow exiting from the wing 5 and contributes with the wing itself in rear aerodynamic load generation. In the second configuration of Fig. 3, the light assembly 6 then comprises at least one portion 14 protruding rearwards and superiorly beyond the rear edge 7 of the wing 5. Figs. 2 and 3 are purposely schematic to exemplify the present invention, which has as main point having turned the light assembly 6 into a movable element also having aerodynamic functions. In other words, the final shape of the light assembly 6, the movement to be carried out to move between the first and the second position (in this example through rotation about the axis 10) and the related actuator may be different, according to requirements and to the type of vehicle.

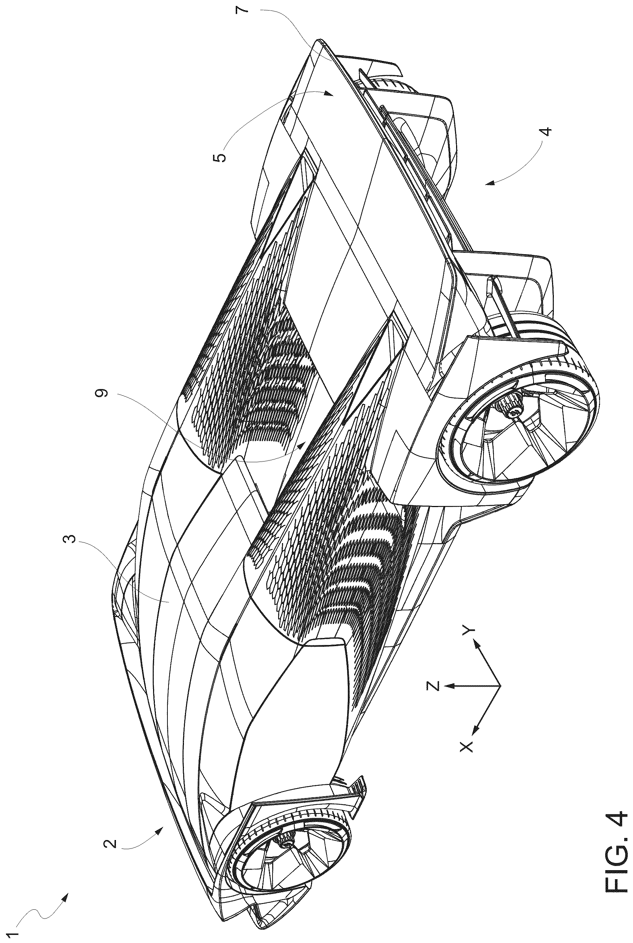

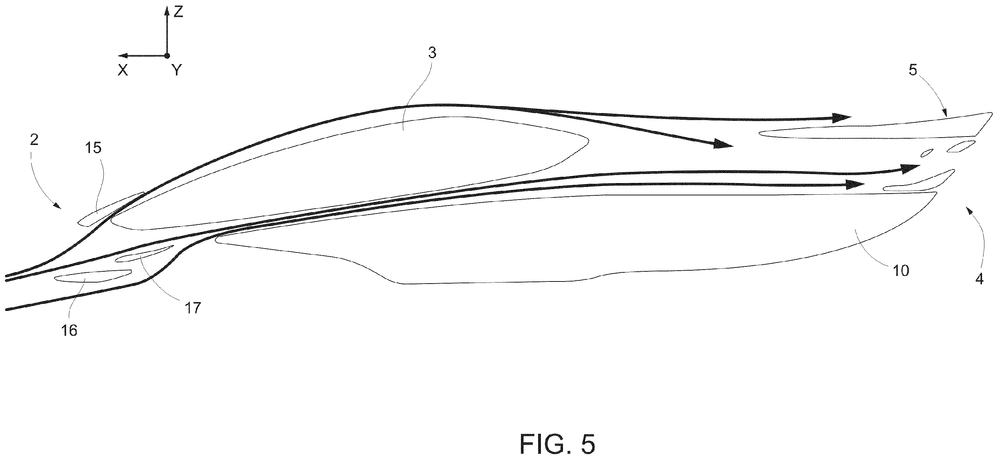

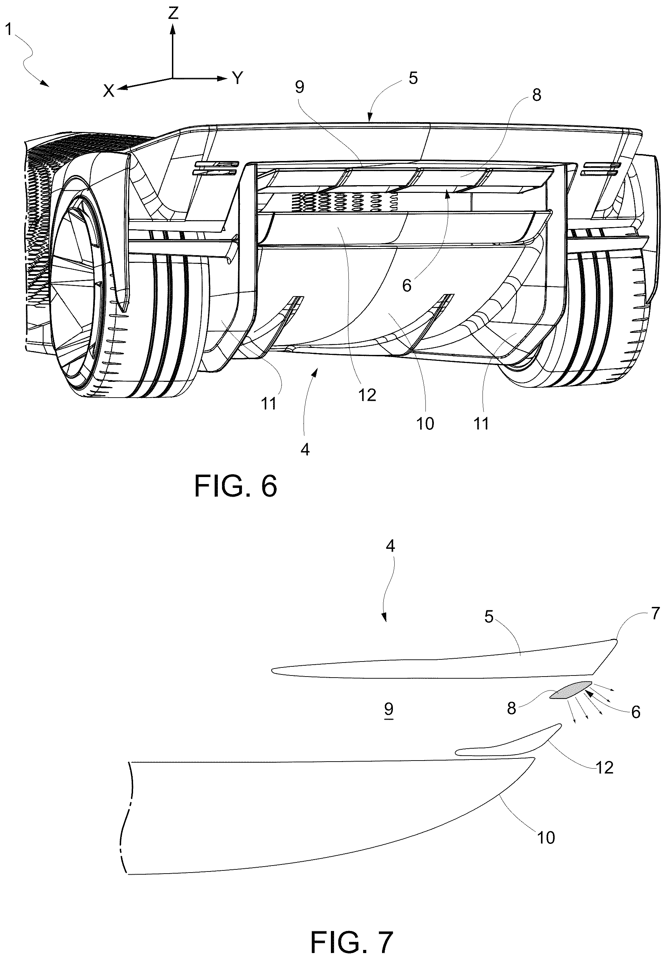

Figs. 4-6 schematically show a second example of a road vehicle that can be improved thanks to the present invention. In a completely innovative way, the vehicle of Fig. 4 comprises an aerodynamic channel 9 along the axis X positioned behind the cockpit 3 and which is limited superiorly by a first rear aerodynamic body 5 and inferiorly by a diffuser body 10 the outer face of which also acts as bottom of the vehicle 1 facing the surface of forward movement. An upper opening in which part of the aerodynamic flow flowing above the cockpit 3 penetrates the channel 9 is present between the cockpit 3 and the aerodynamic body 5. Fig. 5 shows how another aerodynamic flow is also fed into the channel 9 directly from the front end 2 (in this case with a mudguard 15 and a double front wing 16 17) and how part of the aerodynamic flow flowing above the cockpit 3 does not enter the channel 9 and continues above the rear wing 5. Fig. 6 shows in detail the rear end 4 of the vehicle where the discharge outlet of the channel 9 is obtained. This discharge outlet is limited superiorly by the rear portion of the wing 5, below by the rear portion of the diffuser 10 and laterally by two opposite vertical side walls 11 joining the diffuser 10 to the wing 5. Therefore, as visible, the discharge outlet of the channel 9 in this example has a substantially rectangular section. The light assembly 6 in this example comprises a body 8 extending in the fashion of a bridge between the vertical walls 11 parallel to the direction Y immediately below the wing 5. In this example of Fig. 6, the light assembly 6 is in the aerodynamic channel 9 at its discharge outlet. The reference 12 indicates a second aerodynamic body acting as an extension of the diffuser 10 in the discharge outlet of the channel 9.

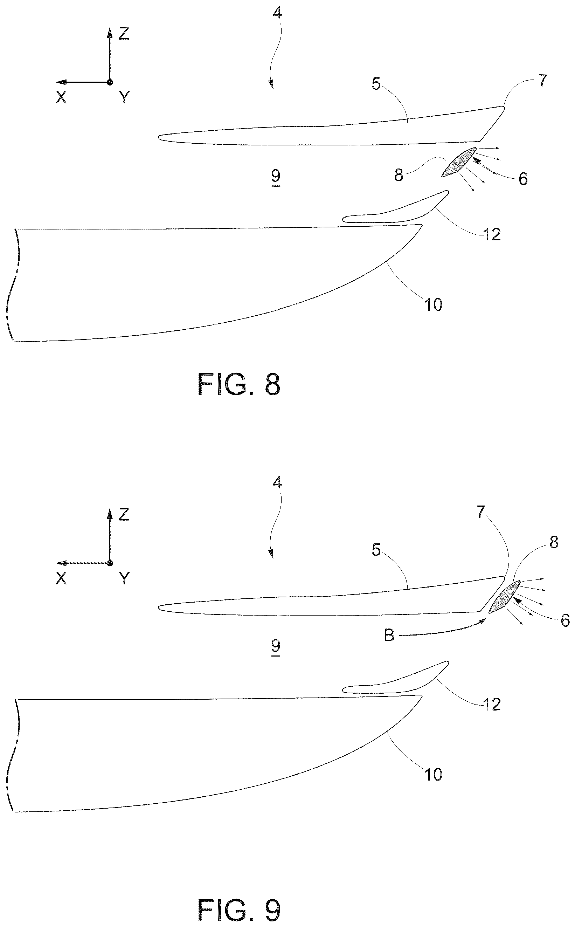

Figs. 7-9 schematically show some components of the vehicle of Figs. 4-6 in three different configurations to vary the rear aerodynamic load. In particular, these figures are schematic views of the section of the rear end 4 along the plane X-Z. Fig. 7 shows the configuration also visible in Fig. 6 wherein the light assembly 6 does not cooperate with the wing 5 for rear load generation. In other words, in Fig. 7 the aerodynamic flow flowing above the wing 5 does not impact the body 8 of the light assembly 6. Fig. 8 shows a different configuration of the light assembly 6. In this configuration, the light assembly 6 is moved by means of rotation to move a portion thereof towards the second aerodynamic body 12. Also in the configuration of Fig. 8, the light assembly 6 does not cooperate with the wing 5 for rear load generation but creates a greater constriction in the channel 9. Fig. 9 shows the configuration wherein the light assembly 6 cooperates with the wing 5 for rear load generation. In this figure, it can be seen how the light assembly 6 by means of a tilting movement B exits from the channel 9 and is positioned downstream of the wing 5 to intercept the flow delivered from the wing 5 and thus contribute to rear load generation.

## Claims

1. Road vehicle (1) with variable rear aerodynamic load; wherein the vehicle (1) comprises a roll axis (X), a pitch axis (Y), a yaw axis (Z), a front end (2) of air penetration as the vehicle (1) moves forward, a cockpit (3) and a rear end (4) beyond which the aerodynamic flow detaches from the vehicle (1); wherein the rear end (4) comprises:
- an aerodynamic body (5) configured to generate a rear aerodynamic load as the vehicle moves forward (1);
- a light assembly (6) comprising at least one lighting device;
**characterised in that**
the light assembly (6) is movable in relation to the aerodynamic body (5) to move between:
- a first configuration wherein it does not cooperate with the aerodynamic body (5) and does not contribute to rear load generation; a
- a second configuration wherein it cooperates with the aerodynamic body (5) and contributes to rear load generation.

2. Vehicle as claimed in claim 1, wherein the aerodynamic body (5) is a transverse wing or a transverse spoiler with development substantially parallel to the pitch axis (Y) and wherein the light assembly (6) comprises a body (8) for housing the electrical lighting device with transverse development substantially parallel to the pitch axis (Y).

3. Vehicle as claimed in claim 2, wherein the wing or spoiler (5) comprises a rear edge (7) for the detachment of the aerodynamic flow flowing above the cockpit (3); wherein in the first configuration the body (8) of the light assembly (6) does not protrude superiorly and posteriorly beyond the rear edge (7) of the wing or spoiler (5); wherein, in the second configuration, the body (8) of the light assembly (6) comprises at least a portion projecting rearwards beyond the rear edge (7) of the wing or spoiler (5).

4. Vehicle as claimed in claim 3, wherein in the second configuration the body (8) of the light assembly (6) comprises at least one portion protruding superiorly beyond or at the same height as the rear edge (7) of the wing or spoiler (5).

5. Vehicle as claimed in any one of claims 2 to 4, wherein the body (8) of the light assembly (6) comprises two modules at symmetrical opposite sides with respect to the roll axis (X) along the axis (Y) that are independently movable with respect to each other.

6. Vehicle as claimed in any one of the preceding claims, wherein the rear end (4) comprises an aerodynamic channel (9) limited superiorly by the first aerodynamic body (5) and inferiorly by a diffuser body (10), in the first configuration the light assembly (6) is housed in the aerodynamic channel (9).

7. Vehicle as claimed in claim 6, wherein the light assembly (6) moves from the first to the second position by means of a tilting movement (B).

8. Vehicle as claimed in claim 7, wherein the tilting movement of the light assembly (6) is realised by providing two vertical side walls (11) joining the diffuser body (10) to the first aerodynamic body (7); slotted openings for housing pins protruding laterally from the body (8) of the light assembly (6) are provided in the vertical walls (11).

9. Vehicle as claimed in any one of the preceding claims 6 to 8, wherein the light assembly (6) is configured to change from the first configuration to a third configuration wherein its position in the aerodynamic channel (9) varies.

10. Vehicle as claimed in claim 9, wherein in the aerodynamic channel (9) there is provided a second airfoil (12) configured to make an extension of the rear edge of the diffuser body (10); wherein in the third configuration the body (8) of the light assembly (6) has a portion directed towards the rear edge of the second airfoil (12) to further obstruct the aerodynamic channel (9) .
